# EUROPÄISCHE PATENTSCHRIFT

(11) **EP 2 791 146 B1**
(45) Veröffentlichungstag und Bekanntmachung des Hinweises auf die Patenterteilung: **04.05.2016**
(21) Anmeldenummer: 12783208.7
(22) Anmeldetag: 06.11.2012
(51) Int. Cl.: C07F 7/02, B01J 8/00, B01J 19/00, C01B 21/087, B01D 3/00, B01D 3/14, C01B 33/00, B01J 19/24

(54) **VERFAHREN ZUR HERSTELLUNG VON TRISILYLAMIN AUS MONOCHLORSILAN UND AMMONIAK UNTER VERWENDUNG VON INERTEM LÖSUNGSMITTEL**
METHOD FOR PRODUCING TRISILYLAMINE FROM CHLOROSILANE AND AMMONIA USING AN INERT SOLVENT
PROCÉDÉ DE PRÉPARATION DE TRISILYLAMINE À PARTIR DE SILANE MONOCHLORÉ ET D'AMMONIAC EN UTILISANT UN SOLVANT INERTE

(30) Priorität: 16.12.2011 DE 102011088814
(43) Veröffentlichungstag der Anmeldung: 22.10.2014
(73) Patentinhaber: Evonik Degussa GmbH, 45128 Essen (DE)
(72) Erfinder: HOPPE, Carl-Friedrich, 63589 Gründau (DE); RAUDELER, Hartwig, 79618 Rheinfelden (DE); GÖTZ, Christian, 63500 Seligenstadt (DE)
(86) Internationale Anmeldenummer: PCT/EP2012/071873
(87) Internationale Veröffentlichungsnummer: WO 2013/087298

(56) Entgegenhaltungen:
- EP-A1- 1 074 537
- WO-A2-2011/049811

## Beschreibung

Die vorliegende Erfindung betrifft ein Verfahren für die Herstellung von Trisilylamin aus Monochlorsilan und Ammoniak in der Flüssigphase. Die vorliegende Erfindung betrifft ferner eine Anlage, in der ein solches Verfahren durchgeführt werden kann.

Trisilylamin mit der chemischen Formal N(SiH₃)₃, im Rahmen der Erfindung mit *"TSA"* abgekürzt, ist eine leicht bewegliche, farblose, selbstentzündliche und leicht hydrolysierbare Flüssigkeit mit Schmelzpunkt -105,6 °C und Siedepunkt +52 °C. Stickstoffhaltige Siliziumverbindungen wie Trisilylamin sind wichtige Substanzen in der Halbleiterindustrie.

Es ist lange bekannt, TSA für die Erzeugung von Siliziumnitrid-Schichten einzusetzen (US 4,200,666, JP 1986-96741). So findet TSA insbesondere Anwendung bei der Chip-Herstellung als Schicht-Präkursor für Siliziumnitrid- oder Siliciumoxynitrid-Schichten. Beispielsweise offenbart EP 1 547 138 ein ganz spezielles Verfahren zur Anwendung von TSA. Aufgrund der Anwendung in der Chip-Herstellung ist es wichtig, Trisilylamin sicher, störungsfrei und konstant in der erforderlichen, in der Regel hochreinen Qualität herstellen zu können.

Trisilylamin lässt sich aus Monochlorsilan und Ammoniak gemäß folgender Gleichung

3 HsSiCl + 4 NH₃ → N(SiH₃)₃ + 3 NH₄Cl (1)

herstellen. Nebenprodukt der Umsetzung ist Ammoniumchlorid. Die Reaktion von Monochlorsilan und Ammoniak ist eine spontane, exotherme Reaktion.

Alfred Stock und Karl Somieski beschreiben in Ber. Dtsch. Chem. Ges. 54, 740 ff., 1921, die sofortige Umsetzung von Monochlorsilangas und Ammoniakgas bei Raumtemperatur gemäß Gleichung (1). Die Reaktion läuft mit überschüssigem Monochlorsilan unter quantitativer Bildung von Trisilylamin ab. Als Nebenprodukt scheidet sich Ammoniumchlorid ab.

In der WO 2010/141551 wird die Umsetzung von Monochlorsilan mit Ammoniak in der Gasphase beschrieben.

Ferner lehrt WO 2011/049811, die Produktion von Silylaminen möglichst nahe am Ort der Verwendung durchzuführen, um den Lieferweg und damit die Lieferzeit kurz zu halten. Gemäß WO 2011/049811 kann die Herstellung von TSA-haltigen Silylaminen aus Monochlorsilan und Ammoniak sowohl in der Gas- als auch in der Flüssig-Phase erfolgen.

In US 2011/0178322 wird ein Verfahren zur Herstellung von Trisilylamin durch thermische Zersetzung von Perhydropolysilazanen in Sauerstoff-freier Atmosphäre bzw. Atmosphäre mit geringem Sauerstoffgehalt beschrieben.

Richard L. Wells und Riley Schaeffer beschreiben in J. Am. Chem. Soc. 88, 37 ff., 1966, die Umsetzung von Monochlorsilan mit Ammoniak, indem eine Mischung der beiden Stoffe von - 196 °C auf Raumtemperatur erwärmt wird. Neben der Trisilylamin-Bildung gemäß Gleichung (1) wird der Ablauf von Folgereaktionen beobachtet:

3 (SiH₃)₃N + n NH₃ → 3 SiH₄ + n NH₃ + (SiH₃NSiH₂)₃ (2)

(SiH₃NSiH₂)₃ + x NH₃ → y SiH₄ + z NH₃ + "polymeric material" (3)

So kann Trisilylamin in Gegenwart von Ammoniak zu Monosilan (SiH₄) und N,N',N"-Trisilylcyclotrisilazan (SiH₃NSiH₂)₃ sowie polymerem Material ("polymeric material") weiterreagieren. Die Folgereaktionen (2) und (3) wirken sich nachteilig auf die Ausbeute an Trisilylamin aus.

Der vorliegenden Erfindung lag somit die Aufgabe zugrunde, eine technische und möglichst wirtschaftliche Lösung zur Herstellung von Trisilylamin aus Ammoniak und Monochlorsilan in der Flüssigphase bereitzustellen, die innerhalb einer mehrstufigen Anlage die Produktströme so vernetzt, dass die eingesetzten Edukte möglichst effizient zur Herstellung des Endprodukts Trisilylamin genutzt werden.

Diese Aufgabe wird erfindungsgemäß entsprechend den Merkmalen in den Patentansprüchen gelöst. So werden nachfolgend ein erfindungsgemäßes Verfahren sowie eine erfindungsgemäße Anlage, in der ein solches Verfahren vorteilhaft durchgeführt werden kann, einschließlich bevorzugter Ausführungsformen beschrieben.

So wurde überraschender Weise gefunden, dass man vorteilhaft Monochlorsilan (A sowie A') gelöst in einem Lösungsmittel, in einem Reaktor (1) flüssig vorlegt und Ammoniak (B), gelöst in dem Lösungsmittel, in den Reaktor einleitet und man ein Produktgemisch enthaltend TSA und NH₄Cl erhält, das in fester Form vorliegt. Anschließend führt man das so erhaltene Produktgemisch aus Reaktor (1) über eine Filtereinheit (2), wobei festes Ammoniumchlorid (C) aus dem Produktgemisch abgetrennt wird. Nachfolgend führt man das Filtrat in die Destillationskolonne (3), in der man überschüssiges Monochlorsilan (A') über Kopf destilliert, kondensiert, in dem Lösungsmittel löst, und vorteilhaft wieder dem Reaktor (1) flüssig zuführt. Dieses Lösungsmittel ist gegenüber Monochlorsilan, Ammoniak, sowie TSA inert und weist einen höheren Siedepunkt als TSA auf. Das Lösungsmittel ist Toluol.

Des Weiteren kann Monosilan (D) über den Kopf der Destillationskolonne (3) abgeführt werden. Den Sumpf (E) der Kolonne (3) fördert man in die Destillationskolonne (4), in der man das Produkt Trisilylamin (G) über Kopf destilliert und kondensiert. Höher siedende Stoffe werden über den Sumpf (F) ausgeschleust und der Kolonne (5) zugeführt. In der Kolonne (5) wird das Lösungsmittel über Kopf destilliert, kondensiert und zu den Reaktor-Feedströmen (A), (A'), (B) als Lösungsmittel zurückgeführt.

Die Einspeisung von Toluol (H) in die Reaktor-Feedströme hat in dem erfindungsgemäßen Verfahren den Vorteil, zu verhindern, dass Monochlorsilan (A sowie A') sowie Ammoniak (B) bereits in den Zuleitungen miteinander reagieren und die Zuleitungen durch Ausfall von Ammoniumchlorid (C) verstopfen. Des Weiteren ist TSA in Toluol (H) stabil. Weiterhin dient Toluol (H) zur Verdünnung der Reaktorlösung sowie zur Aufnahme der Reaktionsenthalpie.

Außerdem ist Ammoniumchlorid (C) in Toluol (H) schwerlöslich, wodurch die Abtrennung von Ammoniumchlorid (C) mittels Filtration erleichtert wird.

Es ist vorteilhaft, wenn man beim erfindungsgemäßen Verfahren Monochlorsilan und Lösungsmittel als Gemisch einsetzt, insbesondere, wenn das Lösungsmittel in einem volumenmäßigen Überschuss zu Monochlorsilan vorhanden ist. Vorzugsweise ist das Volumenverhältnis der Flüssigkeiten Lösungsmittel zu Monochlorsilan von 30 : 1 bis 1 : 1, bevorzugt von 20 : 1 bis 3 : 1, besonders bevorzugt von 10 : 1 bis 3 : 1. Bei Volumenverhältnissen im Bereich von 3 : 1 bis 1 : 1 werden allerdings die Vorteile geringer.

Anschließend kann man Ammoniak (NH₃), geeigneterweise gasförmig oder in flüssiger Form, in Lösungsmittel in die Monochlorsilan haltige Lösung dosieren und reagieren lassen, wobei man vorzugsweise mischt bzw. rührt. Dabei muss die molare stöchiometrische Menge von Monochlorsilan mindestens so hoch sein, wie die molare stöchiometrische Menge von Ammoniak. Vorzugsweise ist Monochlorsilan in molarem stöchiometrischen Überschuss gegenüber Ammoniak vorhanden, da ansonsten die Reaktion stark unselektiv wird, die vermehrte Bildung von Polysilazanen zu erwarten ist, und TSA durch die Einwirkung von NH₃ zersetzt wird.

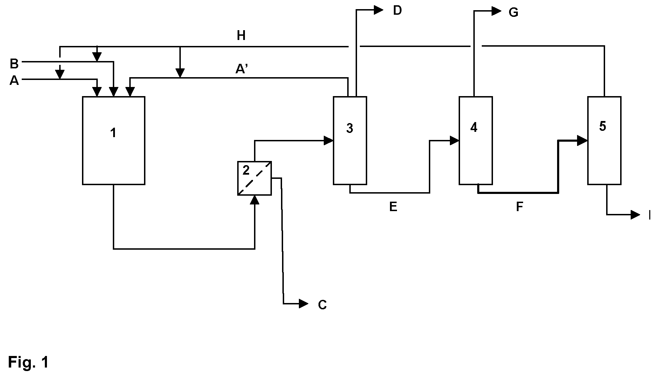

Das erfindungsgemäße Verfahren kann sowohl batchweise, gleichbedeutend mit diskontinuierlich, als auch kontinuierlich durchgeführt werden.
Im Falle einer diskontinuierlichen Herstellung von TSA kann das Reaktionsgemisch in einem Reaktor entspannt und das so erhaltene Produktgemisch destillativ aufgearbeitet werden, vorzugsweise über mindestens zwei Destillationsstufen. In dem Reaktor verbleibendes Ammoniumchlorid kann unterhalb des Reaktors abgelassen und verworfen werden. In der ***Fig. 1*** ist die kontinuierliche Herstellung von TSA gemäß beanspruchtem Verfahren in Form eines Prozessschemas dargestellt. Ammoniumchlorid kann in dem Fall der kontinuierlichen Herstellung abfiltriert werden.

Falls das Verfahren kontinuierlich durchgeführt wird, können außerdem vorteilhaft Rückführungsmöglichkeiten genutzt werden. Wie in ***Fig. 1*** dargestellt, wird MCS wird in der ersten Kolonne am Kopf kondensiert und vermischt mit dem Lösungsmittel, vorzugsweise Toluol, in den Reaktor eingespeist. Dieses Lösungsmittel wird in der dritten Kolonne am Kopf kondensiert und ebenfalls zurück in den Reaktor gefahren.

In dem erfindungsgemäßen Verfahren wird dadurch sehr reines TSA erhalten.

Gegenstand der vorliegenden Erfindung ist daher ein Verfahren zur Herstellung von Trisilylamin in der Flüssigphase, indem man
- Monochlorsilan (A bzw. A') in einem Lösungsmittel (H) gelöst in einem Reaktor (1) flüssig vorlegt, wobei das Lösungsmittel gegenüber Monochlorsilan, Ammoniak sowie TSA inert ist und einen höheren Siedepunkt als TSA aufweist, und
- Ammoniak (B) gelöst in dem Lösungsmittel (H) in die Vorlage einleitet,
- die Umsetzung in Reaktor (1) durchführt,
- anschließend das so erhaltene Produktgemisch aus Reaktor (1) in und durch eine Filtereinheit (2) führt und festes Ammoniumchlorid (C) aus dem Produktgemisch abtrennt und
- das Filtrat aus der Filtereinheit (2) in die Destillationskolonne (3) führt,
- in Destillationskolonne (3) überschüssiges Monochlorsilan (A') über Kopf destilliert, kondensiert und dem Reaktor (1) unter Zuspeisung des Lösungsmittels flüssig zuführt sowie
- gasförmige Stoffe (D), wie Monosilan, über den Kopf der Destillationskolonne (3) abführt und
- den Sumpf (E) in die Destillationskolonne (4) fördert,
- in der Destillationskolonne (4) das Produkt Trisilylamin (G) über Kopf destilliert und kondensiert und
- den Sumpf (F) in die Destillationskolonne (5) fördert,
- in der Destillationskolonne (5) das Lösungsmittel (H) über Kopf destilliert, kondensiert und zu den Reaktor-Feedströmen (A), (A'), (B) als Lösungsmittel zurückführt, und
- höher siedende Stoffe über den Sumpf (I) ausschleust, und das Lösungsmittel (H) Toluol ist.

Dabei führt man die Umsetzung bevorzugt unter Schutzgas, beispielsweise Stickstoff und / oder einem Edelgas, bevorzugt Argon, und in Abwesenheit von Sauerstoff und Wasser, insbesondere in Abwesenheit von Feuchte durch, wobei man die vorliegende Anlage vor dem ersten Befüllvorgang geeigneterweise trocknet und mit Schutzgas spült.

Das Lösungsmittel (H) bildet kein Azeotrop mit TSA und weist einen um mindestens 10 K höheren Siedepunkt als Trisilylamin auf. Als Lösungsmittel wird Toluol eingesetzt.

Auch sind die erfindungsgemäß verwendeten Anlagenteile, die mit hier auftretenden Stoffen in Berührung kommen, vorteilhaft aus rostfreiem Stahl ausgeführt und geregelt kühl- bzw. beheizbar.

Beim erfindungsgemäßen Verfahren setzt man die Komponente (A bzw. A') bezüglich der Komponente (B) bevorzugt in einem molaren stöchiometrischen Überschuss ein, wobei man den Reaktor (1) zur Durchführung der Umsetzung geeigneterweise bis zu 99 %, vorzugsweise von 5 bis 95 %, besonders vorzugsweise von 20 bis 80 % des Reaktorvolumens mit Reaktionsgemisch der Komponenten (A), (B), von der Destillationskolonne (3) zurückgeführtem (A') sowie (H) als Lösungsmittel füllt. Vorteilhaft legt man dazu Monochlorsilan in flüssiger Form gelöst in dem inerten Lösungsmittel vor und leitet Ammoniak in diese Lösung aus Monochlorsilan und dem Lösungsmittel ein, wobei Toluol besonders bevorzugt wird. Dabei kann man Ammoniak gasförmig oder flüssig gelöst in dem Lösungsmittel zudosieren.

Darüber hinaus ist es vorteilhaft bei der Durchführung des erfindungsgemäßen Verfahrens, insbesondere beim Befüllen des Reaktors sowie bei Umsetzung der Komponenten, den Reaktorinhalt zu mischen. So kann man das Reaktions- bzw. Produktgemisch im Reaktor (1) beispielsweise rühren.

Vorteilhaft führt man die Umsetzung des Reaktionsgemisches in Reaktor (1) bei einer Temperatur von -60 bis +40 °C durch, vorzugsweise bei -20 bis +10 °C, besonders bevorzugt - 15 bis +5 °C, ganz besonders bevorzugt -10 bis 0 °C. Die Umsetzung kann bei einem Druck von 0,5 bis 15 bar, insbesondere bei dem sich unter den vorgegebenen Reaktionsbedingungen einstellenden Druck durchgeführt werden.

Ferner stellt sich bei der Umsetzung im Reaktor durch die Vorlage von flüssigem Monochlorsilan gelöst in dem Lösungsmittel im Wesentlichen der Dampf/Flüssig-Gleichgewichtsdruck einer entsprechenden Mischung von Monochlorsilan, des entstehenden Trisilylamins sowie gegebenenfalls anteiliger Nebenprodukte in dem Lösungsmittel ein. Ammoniak wirkt sich nicht auf den Dampf/Flüssig-Gleichgewichtsdruck aus, da Ammoniak beim Einleiten direkt mit dem überschüssig vorhandenen Monochlorsilan abreagiert.

Das erfindungsgemäße Verfahren kann in einer Anlage durchgeführt werden, die umfasst
- einen Reaktor (1) mit den jeweiligen Zuführungen für die Edukte bzw. Komponenten (A), (A'), (B) sowie (H) als Lösungsmittel und einem Auslass für Produktgemisch, der in eine dem Reaktor (1)
- nachgeschalteten Filtereinheit (2) mündet, wobei diese einerseits mit einem Feststoffauslass für Komponente (C) ausgestattet ist und andererseits mit einer Leitung zur Förderung des Filtrats aus der Einheit (2) in
- eine nachfolgende Destillationseinheit ausgestattet ist, die aus mindestens drei Destillationskolonnen (3), (4) und (5) besteht und die Destillationskolonne (3) mit einem Auslass über Kopf für einen gasförmigen Stoffstrom (D) und einem Auslass über Kopf mit Rückleitung für kondensiertes Monochlorsilan (A') unter Zuspeisung von Lösungsmittel (H) in den Reaktor (1) sowie mit einer Leitung zur Überführung von Sumpf (E) aus der Destillationskolonne (3) in die nachfolgende Destillationskolonne (4) zur Gewinnung von Trisilylamin (G) und mit einer Leitung zur Überführung von Sumpf (F) aus der Destillationskolonne (4) in die nachfolgende Destillationskolonne (5) zur Rückgewinnung von Lösungsmittel (H) und Ausschleusung von Sumpf (I) ausgestattet ist.

Das Lösungsmittel (H) ist gegenüber Monochlorsilan, Ammoniak, sowie TSA inert und weist einen höheren Siedepunkt als TSA auf. Dieses Lösungsmittel ist Toluol.

Das erfindungsgemäße Verfahren führt man im Allgemeinen in einer Anlage durch, indem flüssiges Monochlorsilan (A bzw. A') und Ammoniak (B) jeweils mit Toluol, einem Reaktor (1) zugeführt und geeigneterweise gemischt werden, wobei ein Produktgemisch enthaltend TSA und festes NH₄Cl entsteht. Das Produktgemisch wird anschließend über eine Filtereinheit (2) geleitet, in der festes Ammoniumchlorid (C) abgetrennt wird. Das Filtrat aus der Filtereinheit (2) wird einer Destillationskolonne (3) zugeführt, in der überschüssiges Monochlorsilan (A') über Kopf destilliert, kondensiert und wieder dem Reaktor (1) unter Zuspeisung des Lösungsmittels flüssig zugeführt, d. h. vorteilhaft recycliert wird. Weiterhin kann Monosilan (D) über den Kopf der Destillationskolonne (3) abgezogen werden. Der Sumpf (E), der in der Regel TSA, das Lösungsmittel sowie höher siedende Stoffe enthält, wird in die Kolonne (4) gefördert, in der sehr reines Trisilylamin (G) über Kopf destilliert, kondensiert und abgezogen werden kann. Höher siedende Stoffe (F) werden in die Kolonne (5) gefördert, in der das Lösungsmittel (H) über Kopf destilliert, kondensiert und recycliert werden kann. Höher siedende Stoffe (I) können über den Sumpf der Kolonne (5) ausgeschleust werden.

So ermöglicht die vorliegende Erfindung in einfacher und wirtschaftlicher Weise Trisilylamin in technischen Mengen und sehr guter Qualität herzustellen.

### Bezugszeichenliste

- (1): Reaktor
- (2): Filtereinheit
- (3): Destillationskolonne
- (4): Destillationskolonne
- (5): Destillationskolonne
- (A): Monochlorsilan
- (A'): Monochlorsilan, recycliert
- (B): Ammoniak
- (C): Ammoniumchlorid
- (D): gasförmige Stoffe über Kopf aus (3), u. a. Monosilan
- (E): Überführung von Sumpf aus (3) nach (4)
- (F): Sumpf aus (4)
- (G): Trisilylamin
- (H): Lösungsmittel
- (I): Sumpf aus (5)

## Patentansprüche

1. Verfahren zur Herstellung von Trisilylamin in der Flüssigphase,
indem man
- Monochlorsilan (A bzw. A') in einem Lösungsmittel (H) gelöst in einem Reaktor (1) flüssig vorlegt, wobei das Lösungsmittel gegenüber Monochlorsilan, Ammoniak, sowie TSA inert ist und einen höheren Siedepunkt als TSA aufweist, und
- Ammoniak (B) gelöst in dem Lösungsmittel (H) in den Reaktor einleitet,
- die Umsetzung in Reaktor (1) durchführt,
- anschließend das so erhaltene Produktgemisch aus Reaktor (1) in und durch eine Filtereinheit (2) führt und festes Ammoniumchlorid (C) aus dem Produktgemisch abtrennt und
- das Filtrat aus der Filtereinheit (2) in die Destillationskolonne (3) führt,
- in Destillationskolonne (3) überschüssiges Monochlorsilan (A') über Kopf destilliert, kondensiert und dem Reaktor (1) unter Zuspeisung des Lösungsmittels flüssig zuführt sowie
- gasförmige Stoffe (D) über den Kopf der Destillationskolonne (3) abführt und
- den Sumpf (E) in die Destillationskolonne (4) fördert,
- in der Destillationskolonne (4) das Produkt Trisilylamin (G) über Kopf destilliert und kondensiert und
- den Sumpf (F) in die Destillationskolonne (5) fördert,
- in der Destillationskolonne (5) das Lösungsmittel (H) über Kopf destilliert, kondensiert und zu den Reaktor-Feedströmen (A), (A'), (B) als Lösungsmittel zurückführt, und
- höher siedende Stoff über den Sumpf (I) ausschleust,
und das Lösungsmittel (H) Toluol ist.

2. Verfahren nach Anspruch 1,
**dadurch gekennzeichnet,**
**dass** man die Komponente (A bzw. A') bezüglich der Komponente (B) in einem molaren stöchiometrischen Überschuss einsetzt.

3. Verfahren nach Anspruch 1 oder 2,
**dadurch gekennzeichnet,**
**dass** man den Reaktor (1) zur Durchführung der Umsetzung bis zu 99 % des Reaktorvolumens mit Reaktionsgemisch der Komponenten (A, A'), (B) sowie (H) als Lösungsmittel füllt.

4. Verfahren nach mindestens einem der vorangehenden Ansprüche, **dadurch gekennzeichnet,**
**dass** man die Umsetzung in Reaktor (1) bei einer Temperatur von -60 bis +40 °C durchführt.

5. Verfahren nach mindestens einem der vorangehenden Ansprüche, **dadurch gekennzeichnet,**
**dass** man das Verfahren batchweise oder kontinuierlich durchführt.

## Claims

1. Process for production of trisilylamine in the liquid phase,
which process comprises
- initially charging monochlorosilane (A or A') to a reactor (1) in the liquid form of a solution in a solvent (H), wherein the solvent is inert with regard to monochlorosilane, ammonia as well as TSA and has a higher boiling point than TSA has, and
- passing ammonia (B) into the reactor in the form of a solution in the solvent (H),
- performing the reaction in reactor (1),
- subsequently passing the resultant product mixture from reactor (1) into and through a filter unit (2) and removing solid ammonium chloride (C) from the product mixture, and
- passing the filtrate from the filter unit (2) into the distillation column (3),
- excess monochlorosilane (A') being distilled in distillation column (3) overhead, condensed and fed to reactor (1) in liquid form under admixture of the solvent, and also
- removing gaseous substances (D) from the distillation column (3) overhead, and
- conveying the bottoms (E) into the distillation column (4),
- the product trisilylamine (G) being distilled in the distillation column (4) overhead and condensed, and
- conveying the bottoms (F) into the distillation column (5),
- the solvent (H) being distilled in distillation column (5) overhead, condensed and returned to the reactor feedstreams (A), (A'), (B) as a solvent, and
- exporting higher boilers via the bottoms (I),
and the solvent (H) is toluene.

2. Process according to Claim 1,
**characterized in that**
component (A or A') is used in a molar stoichiometric excess relative to component (B).

3. Process according to Claim 1 or 2,
**characterized in that**
the reactor (1) is filled with the reaction mixture of components (A, A'), (B) and also (H) as solvent up to 99% of the reactor volume to perform the reaction.

4. Process according to at least one of the preceding claims,
**characterized in that**
the reaction in reactor (1) is carried out at temperature of -60 to +40°C.

5. Process according to at least one of the preceding claims,
**characterized in that**
the process is carried out batchwise or continuously.

## Revendications

1. Procédé pour la préparation de trisilylamine en phase liquide, consistant à
- disposer au préalable du monochlorosilane (A ou A') dissous dans un solvant (H), sous forme liquide, dans un réacteur (1), le solvant étant inerte par rapport au monochlorosilane, à l'ammoniac et à la TSA et présentant un point d'ébullition supérieur à celui de la TSA, et
- guider de l'ammoniac (B) dissous dans le solvant (H) dans le réacteur,
- réaliser la transformation dans le réacteur (1),
- guider ensuite le mélange de produits ainsi obtenu hors du réacteur (1) dans et à travers une unité de filtration (2) et séparer du chlorure d'ammonium solide (C) du mélange de produits et
- guider le filtrat hors de l'unité de filtration (2) dans la colonne de distillation (3),
- distiller, dans la colonne de distillation (3), le monochlorosilane (A') en excès via la tête, le condenser et l'introduire sous forme liquide dans le réacteur (1) tout en y injectant du solvant, et
- évacuer les substances gazeuses (D) via la tête de la colonne de distillation (3) et
- transporter le fond (E) dans la colonne de distillation (4),
- distiller, dans la colonne de distillation (4), le produit trisilylamine (G) via la tête et le condenser et
- transporter le fond (F) dans la colonne de distillation (5),
- distiller, dans la colonne de distillation (5), le solvant (H) via la tête, le condenser et le recycler dans les flux d'alimentation du réacteur (A), (A'), (B) comme solvant et
- soutirer les substances à point d'ébullition plus élevé via le fond (I),
et le solvant (H) est le toluène.

2. Procédé selon la revendication 1, **caractérisé en ce qu'**on utilise le composant (A ou A') par rapport au composant (B) dans un excès stoechiométrique molaire.

3. Procédé selon la revendication 1 ou 2, **caractérisé en ce qu'**on remplit le réacteur (1), pour la réalisation de la transformation, jusqu'à 99% du volume de réacteur par le mélange réactionnel des composants (A, A'), (B) ainsi que de (H) comme solvant.

4. Procédé selon au moins l'une quelconque des revendications précédentes, **caractérisé en ce qu'**on réalise la transformation dans le réacteur (1) à une température de -60 à +40°C.

5. Procédé selon au moins l'une quelconque des revendications précédentes, **caractérisé en ce qu'**on réalise le procédé par lots ou de manière continue.
